# FASCICULE DE BREVET EUROPEEN

(11) **EP 2 543 092 B1**
(45) Date de publication et mention de la délivrance du brevet: **24.09.2014**
(21) Numéro de dépôt: 11706759.5
(22) Date de dépôt: 02.03.2011
(51) Int. Cl.: H01M 2/10, H01M 2/34, H01M 10/42

(54) **ENSEMBLE D'UN EQUIPEMENT ELECTRIQUE ET D'UNE BATTERIE D'ALIMENTATION PARTAGEANT UN CIRCUIT OSCILLANT**
ANORDNUNG MIT EINEM ELEKTROGERÄT UND EINER ENERGIEVERSIRGUNGSBATTERIE MIT GEMEINSAMER SCHWINGKREISSCHALTUNG
ASSEMBLY INCLUDING AN ELECTRIC APPARATUS AND A POWER SUPPLY BATTERY SHARING AN OSCILLATING CIRCUIT

(30) Priorité: 05.03.2010 FR 1051632
(43) Date de publication de la demande: 09.01.2013
(73) Titulaire: SAGEM DEFENSE SECURITE, 92100 Boulogne Billancourt (FR)
(72) Inventeur: NOLLET, Michel, F-75015 Paris (FR)
(74) Mandataire: Lavialle, Bruno François Stéphane
(86) Numéro de dépôt international: PCT/EP2011/001028
(87) Numéro de publication internationale: WO 2011/107269

(56) Documents cités:
- EP-A1- 1 786 051
- EP-A1- 2 065 962
- JP-A- 4 127 848
- JP-A- 59 173 947

## Description

La présente invention concerne un ensemble équipement électrique et batterie d'alimentation de l'équipement. Par équipement électrique, on entend un équipement comportant au moins un composant fonctionnant à l'électricité tel qu'un composant électronique ou électrotechnique. Par batterie, on entend une pile primaire, c'est-à-dire non rechargeable, ou une pile secondaire, c'est-à-dire rechargeable, comportant un ou plusieurs éléments d'accumulation d'énergie électrique.

Il existe des batteries comportant un boîtier renfermant un ou plusieurs éléments d'accumulation d'énergie électrique, un connecteur de raccordement externe qui est relié par au moins deux conducteurs à chaque élément d'accumulation et qui débouche à l'extérieur du boîtier, et un circuit électronique qui est relié à chaque élément d'accumulation. Le circuit électronique assure la gestion du fonctionnement de la batterie et fournit, à l'équipement raccordé au connecteur et alimenté par la batterie, des informations sur la batterie comme l'état de charge, la température... Le circuit électronique comporte généralement des modules de protection de la batterie contre les surcharges, surintensités... et un dispositif indicateur d'état de charge. Il peut comporter un organe de détection de la présence d'un équipement électrique raccordé au connecteur comme cela sera décrit plus loin.

Le connecteur de raccordement comprend une pluralité de plots reliés à l'élément d'accumulation soit directement soit via le circuit électronique. Ces plots sont généralement recouverts d'une fine couche d'or (de platine, d'argent ou d'un autre métal ou alliage résistant à la corrosion et ayant de bonnes propriétés pour réaliser un contact électrique) pour assurer une parfaite conduction électrique.

Comme tout générateur électrique, les batteries sont très sensibles aux liaisons qui peuvent être établies accidentellement entre deux plots. Trois types de liaison sont possibles.

Une liaison par un élément électriquement conducteur de faible résistance comme une clé métallique ou le revêtement métallisé d'un emballage risque d'établir un court-circuit entraînant notamment :
- la décharge de la batterie,
- un arc électrique et une perturbation électromagnétique au moment de l'établissement du contact ou de sa rupture,
- une perturbation chimique pour certains couples électrochimiques (Li-Io, LiSoCl₂, LiMnO₂), et/ou
- un fort échauffement des batteries de faibles résistances internes (batteries Li-Io, NiCd, PbSO₄ par exemple).

L'arc électrique peut engendrer une détérioration de la couche d'or ou bien encore s'avérer dangereux en amorçant un incendie ou une déflagration en atmosphère combustible ou déflagrante.

Une liaison par un élément électriquement conducteur de plus forte résistance constitue une charge dissipant la puissance de la batterie sous forme d'effet Joule et entraîne ainsi une décharge de la batterie et un échauffement important qui peut être dangereux (risque de brûlure ou d'incendie par exemple).

Une liaison ionique peut être établie du fait de la présence d'eau (ou d'un autre électrolyte) recouvrant deux plots. Il en résulte un déchargement de la batterie et une électrolyse détériorant la couche d'or (ou d'un autre métal tel que ceux mentionnés ci-dessus) altérant ainsi la qualité de conduction des plots.

Pour éviter une telle liaison accidentelle de deux plots, il est connu d'associer au connecteur un capuchon s'ajustant de manière étanche sur le connecteur. De tels capuchons doivent être ôtés avant la mise en place de la batterie, compliquant les manipulations nécessaires à cette mise en place, notamment avec des gants, et risquent d'être perdus.

Il est connu également de munir le circuit électronique de la batterie d'un organe de détection de la présence d'un équipement électrique raccordé au connecteur. Cet organe fonctionne sur le principe de la boucle sèche ou de la boucle active. La boucle sèche a l'avantage de ne prélever aucun courant sur l'élément d'accumulation de la batterie, mais nécessite la présence d'un générateur électrique dans l'équipement. La boucle active permet de détecter la présence d'un équipement dénué de générateur électrique. Elle consiste à mettre sous tension, en permanence ou périodiquement, les plots de puissance du connecteur, ou un ou plusieurs plots dédiés, généralement via une résistance ou un composant présentant une caractéristique résistive ou une caractéristique de générateur de courant. La détection de présence de l'équipement se fait alors en mesurant le courant ou la tension sur les plots en question que l'on nomme ici pour plus de commodité plots de détection. En effet, la connexion de l'équipement crée un courant ou une diminution de tension sur les plots de détection, courant ou diminution de courant qui peut être interprété(e) par la batterie comme indiquant qu'un équipement est connecté. Il existe des circuits plus perfectionnés dans lesquels l'équipement envoie à la batterie une réponse plus ou moins élaborée (signal analogique ou logique) lorsque les plots de détection envoient une tension ou un courant à l'équipement. Une fois que la présence de l'équipement est détectée par la batterie, le circuit électronique de la batterie établit les liaisons électriques entre éléments d'accumulation et plots de puissance (qui peuvent être les plots servant à la détection).

EP 1786051 décrit un ensemble équipement électrique et batterie d'alimentation électrique comprenant une unité sécurité.

Un tel procédé de détection de présence de l'équipement présente toutefois un inconvénient important : certains plots du connecteur de la batterie sont sous tension. La décharge par électrolyse et la détérioration qui en résulte ne concernent donc pas que les plots de puissance (reliés au pôle positif et au pôle négatif de la batterie via l'interrupteur statique du circuit de sécurité) mais également les autres plots, dès lors qu'ils sont sous tension et notamment, sur la batterie, les plots de son organe de détection de présence de l'équipement. Une solution connue à cet inconvénient consiste à réaliser la connexion du ou des plots de détection de présence, via une résistance interne élevée afin de diminuer le courant d'électrolyse. Ce procédé a lui-même plusieurs inconvénients :
- il ne fait que ralentir la dégradation des plots puisqu'il diminue le courant d'électrolyse mais ne l'annule pas.
- il produit de fausses détections de présence d'équipements si son principe est la détection d'un courant passant par les plots correspondants de l'équipement. En effet, la résistance interne étant élevée, la conduction par un peu d'eau ou d'humidité de surface, suffira à produire le courant de détection de l'équipement, même en l'absence d'équipement.
- il produit des lacunes de détection d'équipements si son principe est d'envoyer un signal électrique à l'équipement pour en attendre une réponse. En effet, la résistance interne étant élevée, la conduction par un peu d'eau, d'humidité de surface ou de salissure, suffira à faire chuter la tension de sorte que l'équipement ne recevra pas suffisamment de signal pour envoyer sa réponse à la batterie.

Un but de l'invention est de fournir un moyen pour limiter le risque d'une décharge accidentelle de l'élément d'accumulation via une liaison électrique établie involontairement entre deux plots du connecteur.

A cet effet, on prévoit, selon l'invention, un ensemble équipement électrique et batterie d'alimentation électrique de l'équipement, l'équipement comportant un châssis ayant un logement pour la batterie et un connecteur débouchant dans le logement, et la batterie comportant un boîtier renfermant au moins un élément d'accumulation d'énergie électrique, un connecteur de raccordement externe et un circuit de sécurité qui est monté entre l'élément d'accumulation et le connecteur de la batterie et qui possède un état inactivé de blocage du courant vers le connecteur et un état activé de passage du courant vers le connecteur. Le circuit de sécurité est agencé pour être activable par raccordement à un circuit oscillant comprenant une première partie et une deuxième partie. Le boîtier contient la première partie dudit circuit oscillant qui est raccordée à des broches du connecteur de la batterie et l'équipement comprend la deuxième partie dudit circuit oscillant qui est raccordée à des broches du connecteur de l'équipement de telle manière que les deux parties soient raccordées l'une à l'autre lorsque la batterie est connectée à l'équipement, les parties comportant chacune au moins un composant nécessaire à l'oscillation du circuit oscillant.

L'activation du circuit de sécurité résulte alors de la détection de l'activité du circuit oscillant, par la mesure de la consommation du circuit oscillant ou par détection de la présence d'un signal en sortie de celui-ci. Des conductances parasites franches (court circuit) ou imparfaites telles que des salissures ou de l'humidité, n'auront jamais les caractéristiques électriques du composant (inductif, capacitif ou combinaison inductance et condensateur, quartz) qui manque pour que l'oscillateur fonctionne. Ces conductances parasites ne peuvent donc mettre en oscillation l'oscillateur et, par conséquent, ne peuvent pas activer le circuit de sécurité. Les schémas des oscillateurs connus comportent généralement des liaisons internes capacitives ou se prêtent à l'adjonction de condensateurs de liaison. La liaison entre les deux parties du circuit oscillant qui se trouvent, l'une dans la batterie, l'autre dans l'équipement, peut donc être avantageusement capacitive car les liaisons capacitives transmettent un courant (alternatif) lorsque l'oscillateur fonctionne, mais n'en transmettent pas lorsque l'oscillateur n'oscille pas. Ainsi, si la batterie n'est pas raccordée à l'équipement, la partie incomplète du circuit oscillant qui se trouve dans la batterie n'oscille pas et donc aucun courant ne passe par les liaisons capacitives ni par les plots auxquels ces liaisons capacitives sont raccordées.

Ainsi, lorsque la batterie n'est pas raccordée à l'équipement, aucun des plots du connecteur n'est sous tension, ce qui supprime le risque d'une électrolyse (qui détruirait les contacts) ou d'une consommation électrique extérieure accidentelle (qui déchargerait la batterie).

De préférence, la première partie de l'oscillateur, qui est dans la batterie, est l'élément actif du circuit oscillant (transistors, circuits intégrés) et la seconde partie (dans l'équipement) comprend les éléments réactifs (inductance, transformateur de couplage, circuit LC, quartz ou combinaison de ceux-ci) puisqu'ils ne nécessitent pas de source de tension continue.

Selon un premier mode de réalisation, le circuit oscillant comprend un circuit résonnant LC comportant une inductance entre deux condensateurs, l'inductance étant disposée dans l'équipement et ayant des extrémités reliées chacune à une borne du connecteur, au moins un des condensateurs étant disposé dans la batterie.

Ce mode de réalisation présente une structure particulièrement simple, gage de fiabilité. Un tel circuit LC série est par exemple du type oscillateur de CLAPP, de COLPITTS, de HARTLEY ou autre.

Selon un deuxième mode de réalisation, le circuit oscillant comporte un quartz. Le quartz est de préférence placé dans l'équipement.

Un tel circuit oscillant est par exemple du type oscillateur de PIERCE.

De préférence alors, la batterie comporte un circuit de commande agencé pour identifier l'équipement à partir d'une fréquence d'oscillations du quartz de celui-ci.

Cela permet à la batterie, non seulement de savoir qu'un équipement est connecté, mais encore d'identifier le type d'équipement. Le circuit de commande peut alors être agencé pour adapter les caractéristiques de l'alimentation à l'équipement raccordé, pour interdire l'alimentation de l'équipement ou émettre un signal d'alerte si la batterie ne peut délivrer un courant ayant des caractéristiques adaptées à l'alimentation de l'équipement. Le circuit de commande comprend à cette fin une mémoire contenant par exemple une liste des équipements que la batterie est autorisée à alimenter éventuellement accompagnée d'informations relatives à des paramètres d'alimentation propres à chacun des équipements.

Selon un troisième mode de réalisation, le circuit oscillant est du type à pont de Wien ou du type à déphasage.

D'autres caractéristiques et avantages de l'invention ressortiront à la lecture de la description qui suit de modes de réalisation particuliers non limitatifs de l'invention.

Il sera fait référence aux dessins annexés, parmi lesquels :

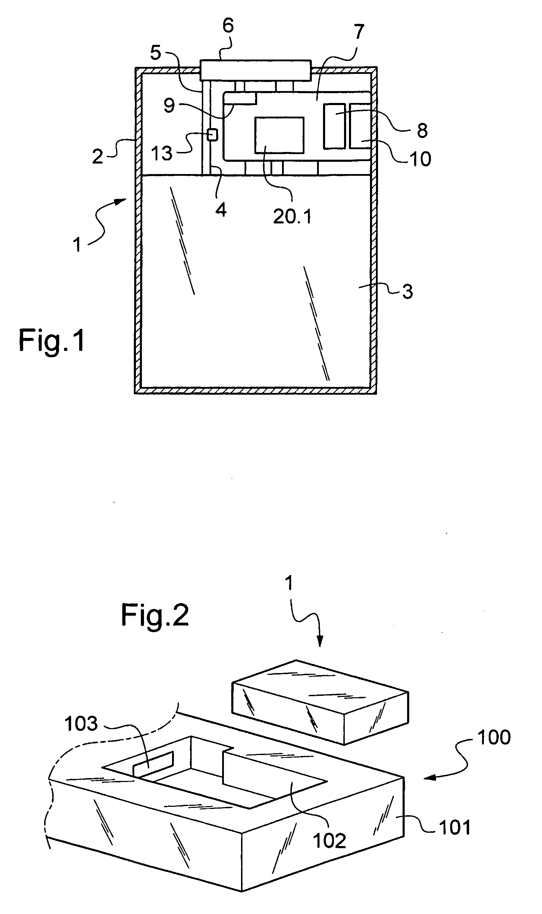

- la figure 1 est une vue schématique en coupe d'une batterie conforme à l'invention,
- la figure 2 est une vue partielle en perspective d'un ensemble équipement et batterie conforme à l'invention,
- la figure 3 est une vue schématique du circuit électrique d'un ensemble conforme à un premier mode de réalisation de l'invention,
- la figure 4 est une vue schématique du circuit électrique d'un ensemble conforme à un deuxième mode de réalisation de l'invention,
- la figure 5 est une vue schématique du circuit électrique d'un ensemble conforme à un troisième mode de réalisation de l'invention.

En référence aux figures, la batterie conforme à l'invention, généralement désignée en 1, est destinée à l'alimentation d'un équipement électrique 100 comportant un châssis 101 pourvu d'un logement 102 dans lequel débouche un connecteur 103.

La batterie 1 comprend un boîtier 2 renfermant un élément d'accumulation d'énergie électrique 3 relié par deux conducteurs 4, 5 à un connecteur 6 de raccordement externe qui est fixé dans une ouverture du boîtier 2 pour être accessible depuis l'extérieur du boîtier 2 et qui est agencé pour coopérer avec le connecteur 103.

Le boîtier 1 reçoit en outre un circuit électronique, symbolisé en 7, qui est relié à l'élément d'accumulation 3 pour être alimenté par celui-ci et qui est relié au connecteur 6 pour envoyer des informations relatives à la batterie à un circuit correspondant de l'équipement 100. Le circuit électronique 7 comporte ici de préférence un organe de mesure 8 de paramètres de fonctionnement de l'élément d'accumulation 3 (comme la température et la tension) et un dispositif indicateur d'état de charge 10 connu en lui-même.

La batterie 1 comprend un circuit de sécurité qui comporte au moins un commutateur statique 13, ici un transistor bipolaire, monté sur le conducteur 4. L'entrée de commande du commutateur 13 est reliée au circuit électronique 7 et à une première partie 20.1 d'un circuit oscillant portant la référence générale 20 et ayant une deuxième partie 20.2 reçue dans l'équipement.

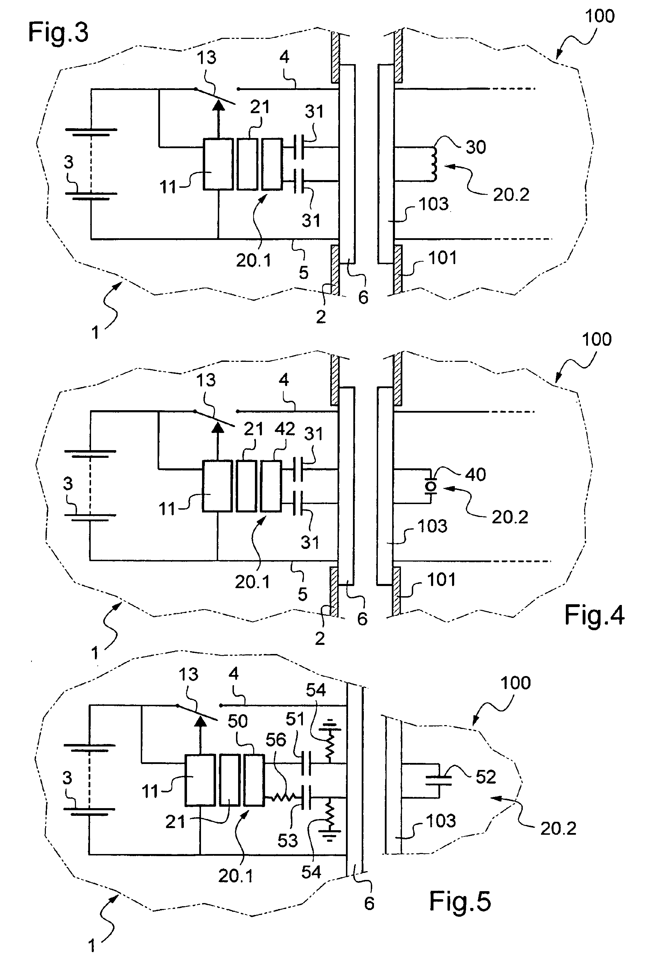

Conformément au premier mode de réalisation et en référence également à la figure 3, le circuit oscillant 20 est un oscillateur à circuit résonnant LC. En série avec l'inductance 30, sont disposés deux condensateurs 31. Les deux condensateurs 31 appartiennent à la première partie 20.1 et ont chacun une électrode reliée à une borne du connecteur 6. L'inductance 30 appartient à la deuxième partie 20.2 et possède deux extrémités reliées chacune à un des plots du connecteur 103 de l'équipement 100.

La partie 20.1 du circuit oscillant est reliée à une unité de commande 11 du circuit électronique 7 via un circuit détecteur d'oscillations 21, et est agencée pour commander la fermeture du commutateur statique 13 lorsque les parties 20.1 et 20.2 du circuit oscillant sont reliées l'une à l'autre et que le circuit oscillant se met à osciller. Le détecteur d'oscillations 21 fonctionne par exemple en transformant (par exemple par diode et condensateur associés ou non à un amplificateur) l'amplitude de l'oscillation en une tension logique. Il peut aussi mesurer le courant consommé par la partie 20.1 de l'oscillateur : cet oscillateur est polarisé de sorte que, au repos, sa consommation est très faible. Elle augmente lorsqu'il oscille. D'autres procédés de détection sont possibles (par exemple détection à distance en utilisant un effet de couplage capacitif, ou magnétique, ou électromagnétique).

La mise en place correcte de la batterie dans le logement 102 entraîne la connexion du connecteur 6 au connecteur 103 et donc la mise en oscillation du circuit oscillant 20 commandant, via le détecteur d'oscillations 21 et l'unité de commande 11, la fermeture du commutateur statique 13. L'unité de commande 11 du circuit électronique 7 maintient alors le commutateur statique 13 dans son état passant tant que l'équipement 100 est détecté.

Lorsque la batterie 1 est ôtée de l'équipement 100, l'oscillation s'arrête et l'unité de commande 11 du circuit électronique 7 commande le commutateur statique 13 dans l'état bloqué.

De nombreuses variantes du premier mode de réalisation sont possibles. Par exemple, la partie 20.2 peut comporter l'inductance et le condensateur du circuit LC résonnant, la liaison avec la partie 20.1 étant assurée par les condensateurs 31 via les connecteurs 103 et 6. Dans les cas où l'on souhaite raccorder à la partie 20.1 une prise intermédiaire de l'inductance (oscillateur de HARTLEY ou de COLPITTS à diviseur inductif d'impédances) ou avoir un retour par couplage inductif, on peut rajouter une ou plusieurs liaisons capacitives entre les parties 20.2 et 20.1, via les connecteurs 6 et 103.

Les éléments identiques ou analogues à ceux précédemment décrits porteront la même référence numérique dans la description qui suit du deuxième mode de réalisation.

En référence à la figure 4, et conformément au deuxième mode de réalisation, le circuit oscillant 20 est un circuit de type à résonateur à quartz (par exemple un oscillateur dit de PIERCE) comportant un quartz 40, deux condensateurs 41, et un amplificateur ou inverseur 42 constituant le principal élément du reste de la partie 20.1. Les condensateurs 41 appartiennent à la partie 20.1 et sont reliés chacun à un des plots du connecteur 6 tandis que le résonateur à quartz 40 (et éventuellement d'autres composants d'accompagnement) appartient à la partie 20.2 et est relié à deux plots du connecteur 103. Lorsque les parties 20.1 et 20.2 sont reliées l'une à l'autre (c'est-à-dire que la batterie est dans le logement de l'équipement avec les connecteurs 6 et 103 raccordés l'un à l'autre), la connexion du quartz au reste du circuit oscillateur, produit la mise en oscillation.

Comme précédemment, la partie 20.1 du circuit oscillant est reliée à l'unité de commande 11 du circuit électronique 7 via le détecteur d'oscillations 21 pour commander la fermeture du commutateur statique 13 lorsque l'oscillation attendue est détectée dans le circuit oscillant.

Le résonateur à quartz 40 peut aussi constituer un élément d'identification de l'équipement par la batterie, en fonction de sa fréquence.

L'unité de commande 11 incorpore alors une mémoire contenant par exemple une liste des équipements que la batterie est autorisée à alimenter éventuellement accompagnée d'informations relatives à des paramètres d'alimentation propres à chacun des équipements. Le circuit électronique 7 est agencé pour, en fonction des informations mémorisées, adapter les caractéristiques de l'alimentation à l'équipement raccordé, pour interdire l'alimentation de l'équipement ou émettre un signal d'alerte si la batterie ne peut délivrer un courant ayant des caractéristiques adaptées à l'alimentation de l'équipement.

En référence à la figure 5, et conformément au troisième mode de réalisation, le circuit oscillant 20 est du type oscillateur à déphasage et comprend un amplificateur 50 et des déphaseurs RC (ici trois en cascade) constitués des condensateurs 51, 52, 53 et des résistances 54, 55, 56 reliés entre l'entrée négative et la sortie d'un amplificateur 50 constituant le principal élément du reste de la partie 20.1. L'amplificateur 50 et les condensateurs 51, 53 appartiennent à la première partie 20.1 et le condensateur 52 appartient à la deuxième partie 20.2 et a ses armatures reliées à des plots du connecteur 103.

Bien entendu, l'invention n'est pas limitée aux modes de réalisations décrits mais englobe toute variante entrant dans le champ de l'invention telle que définie par les revendications.

En particulier, l'invention est applicable à des batteries et des équipements mettant en oeuvre d'autres modes de raccordement, et par exemple un raccordement via un câble ayant une extrémité libre en saillie du châssis de l'équipement et pourvue d'un connecteur.

La batterie peut avoir une structure différente de celle décrite et par exemple comprendre plusieurs éléments d'accumulation ou un indicateur externe de niveau de charge visuel ou sonore.

Le circuit oscillant peut avoir une structure différente de celle décrite et être par exemple : un oscillateur à circuit LC série ou parallèle, avec ou sans diviseur d'impédance inductif ou capacitif, de type CLAPP, HARTLEY, COLPITTS ou autre (le composant réactif mis dans l'équipement est par exemple l'inductance ou le condensateur ou le LC complet), un oscillateur à circuit LC série ou parallèle avec transformateur d'isolation ou d'impédance un oscillateur à quartz de type PIERCE ou non, un oscillateur à déphasage RC ou LR ou LC, un oscillateur à pont de Wien...

Le circuit oscillant peut également être un oscillateur relaxé de type à intégrateur de MILLER (dit aussi bloking) dont le courant de polarisation est quasi nul en état de relaxation et dont le condensateur intégrateur, divisé ou non, peut constituer le composant réactif intégré à l'équipement.

## Revendications

1. Ensemble équipement électrique (100) et batterie (1) d'alimentation électrique de l'équipement, l'équipement comportant un châssis (101) ayant un logement (102) pour la batterie et un connecteur débouchant dans le logement, et la batterie comportant un boîtier (2) renfermant au moins un élément d'accumulation (3) d'énergie électrique, un connecteur de raccordement externe (6) et un circuit de sécurité qui est monté entre l'élément d'accumulation et le connecteur de la batterie et qui possède un état inactivé de blocage du courant vers le connecteur et un état activé de passage du courant vers le connecteur, **caractérisé en ce que** le circuit de sécurité est agencé pour être activable par raccordement à un circuit oscillant comprenant une première partie et une deuxième partie et **en ce que** le boîtier contient la première partie dudit circuit oscillant qui est raccordée à des broches du connecteur de la batterie et l'équipement comprend la deuxième partie dudit circuit oscillant qui est raccordée à des broches du connecteur de l'équipement de telle manière que les deux parties soient raccordées l'une à l'autre lorsque la batterie est connectée à l'équipement, les parties comportant chacune au moins un composant nécessaire à l'oscillation du circuit oscillant.

2. Ensemble selon la revendication 1, dans lequel la première partie de l'oscillateur contient l'élément actif du circuit oscillant et la seconde partie comprend au moins un élément réactif.

3. Ensemble selon la revendication 2, dans lequel l'élément actif est un circuit intégré ou un transistor.

4. Ensemble selon la revendication 2, dans lequel l'élément réactif comprend au moins l'un des éléments suivants : une inductance, un transformateur de couplage, un circuit LC, un quartz.

5. Ensemble selon la revendication 1, dans lequel le circuit oscillant comprend un circuit résonnant LC comportant une inductance et au moins un condensateur, l'inductance étant disposée dans l'équipement et le condensateur étant disposé dans la batterie.

6. Ensemble selon la revendication 1, dans lequel le circuit oscillant comprend un circuit résonnant LC comportant une inductance entre deux condensateurs, l'inductance étant disposée dans l'équipement et les condensateurs étant disposés dans la batterie.

7. Ensemble selon la revendication 1, dans lequel le circuit oscillant comporte un quartz contenu dans l'équipement.

8. Ensemble selon la revendication 7, dans lequel la batterie comporte un circuit de commande agencé pour identifier l'équipement à partir d'une fréquence d'oscillations du quartz de celui-ci.

9. Ensemble selon la revendication 1, dans lequel le circuit oscillant comprend un oscillateur à déphasage comportant plusieurs condensateurs en série dont l'un est monté dans l'équipement.

## Patentansprüche

1. Anordnung aus elektrischer Ausrüstung (100) und Batterie (1) zur elektrischen Versorgung der Ausrüstung, wobei die Ausrüstung einen Rahmen (101) umfasst, der eine Aufnahme (102) für die Batterie und einen Anschluss hat, der in die Aufnahme mündet, und wobei die Batterie ein Gehäuse (2) umfasst, das mindestens ein Speicherelement (3) zum Speichern elektrischer Energie umschließt, einen äußeren Verbindungsanschluss (6) und einen Schutzkreis, der zwischen dem Speicherelement und dem Anschluss der Batterie geschaltet ist und einen inaktivierten Sperrzustand zum Sperren des Stroms in Richtung des Anschlusses und einen aktivierten Durchlasszustand zum Durchlass des Stroms in Richtung des Anschlusses aufweist, **dadurch gekennzeichnet, dass** der Schutzkreis derart ausgebildet ist, dass er durch ein Verbinden mit einem Schwingkreis aktivierbar ist, der einen ersten Teil und einen zweiten Teil umfasst, und dass das Gehäuse den ersten Teil des genannten Schwingkreises, der mit Anschlussstiften des Anschlusses der Batterie verbunden ist, enthält und die Ausrüstung den zweiten Teil des genannten Schwingkreises, der mit den Anschlussstiften des Anschlusses der Ausrüstung verbunden ist, umfasst, derart, dass die beiden Teile miteinander verbunden sind, wenn die Batterie mit der Ausrüstung verbunden ist, wobei die Teile jeweils mindestens ein Bauelement umfassen, das zur Schwingung des Schwingkreises notwendig ist.

2. Anordnung nach Anspruch 1, wobei der erste Teil des Oszillators das aktive Element des Schwingkreises enthält und der zweite Teil zumindest ein reaktives Element umfasst.

3. Anordnung nach Anspruch 2, wobei das aktive Element ein integrierter Schaltkreis oder ein Transistor ist.

4. Anordnung nach Anspruch 2, wobei das reaktive Element mindestens eines der folgenden Elemente umfasst: eine Induktivität, einen Kopplungstransformator, eine LC-Schaltung, einen Quarz.

5. Anordnung nach Anspruch 1, wobei der Schwingkreis einen LC-Resonanzkreis umfasst, der eine Induktivität und mindestens einen Kondensator umfasst, wobei die Induktivität in der Ausrüstung angeordnet ist und der Kondensator in der Batterie angeordnet ist.

6. Anordnung nach Anspruch 1, wobei der Schwingkreis einen LC-Resonanzkreis umfasst, der eine Induktivität zwischen zwei Kondensatoren umfasst, wobei die Induktivität in der Ausrüstung angeordnet ist und die Kondensatoren in der Batterie angeordnet sind.

7. Anordnung nach Anspruch 1, wobei der Schwingkreis einen Quarz umfasst, der in der Ausrüstung enthalten ist.

8. Anordnung nach Anspruch 7, wobei die Batterie einen Steuerkreis umfasst, der so ausgebildet ist, dass er die Ausrüstung anhand einer Schwingungsfrequenz ihres Quarzes identifiziert.

9. Anordnung nach Anspruch 1, wobei der Schwingkreis einen Oszillator mit Phasenverschiebung umfasst, der mehrere in Reihe geschaltete Kondensatoren umfasst, von denen einer in der Ausrüstung montiert ist.

## Claims

1. An assembly comprising electrical equipment (100) and a battery (1) for electrically powering the equipment, the equipment comprising a structure (101) having a slot (102) for the battery and a connector penetrating into the slot, and the battery comprising a housing (2) containing at least one electrical energy storage element (3), an external connection connector (6), and a safety circuit that is connected between the storage element and the connector of the battery and that possesses an inactivated state blocking the passage of electricity to the connector and an activated state allowing electricity to pass to the connector, the assembly being **characterized in that** the safety circuit is arranged to be activatable by being connected to an oscillator circuit comprising a first portion and a second portion, and **in that** the housing contains the first portion of said oscillator circuit that is connected to pins of the connector of the battery, and the equipment includes the second portion of said oscillator circuit that is connected to pins of the connector of the equipment in such a manner that the two portions are connected together when the battery is connected to the equipment, each portion having at least one component necessary for oscillation of the oscillator circuit.

2. An assembly according to claim 1, wherein the first portion of the oscillator contains the active element of the oscillator circuit and the second portion includes at least one reactive element.

3. An assembly according to claim 2, wherein the active element is an integrated circuit or a transistor.

4. An assembly according to claim 2, wherein the reactive element comprises at least one of the following elements: an inductor, a coupling transformer, an LC circuit, a crystal.

5. An assembly according to claim 1, wherein the oscillator circuit includes an LC resonant circuit having an inductor and at least one capacitor, the inductor being arranged in the equipment and the capacitor being arranged in the battery.

6. An assembly according to claim 1, wherein the oscillator circuit includes an LC resonant circuit having an inductor between two capacitors, the inductor being arranged in the equipment and the capacitors being arranged in the battery.

7. An assembly according to claim 1, wherein the oscillator circuit includes a crystal contained in the equipment.

8. An assembly according to claim 7, wherein the battery includes a control circuit arranged to identify the equipment from an oscillating frequency of its crystal.

9. An assembly according to claim 1, wherein the oscillator circuit comprises a phase-shift oscillator having a plurality of capacitors in series, one of which is arranged in the equipment.
